# EUROPÄISCHE PATENTSCHRIFT

(11) **EP 4 345 144 B1**
(45) Veröffentlichungstag und Bekanntmachung des Hinweises auf die Patenterteilung: **23.07.2025**
(21) Anmeldenummer: 23198138.2
(22) Anmeldetag: 19.09.2023
(51) Int. Cl.: C09J 123/08, C09J 7/30, C08L 15/00, C08K 5/00, C09J 7/38

(54) **AUSHÄRTBARE HAFTKLEBEMASSE MIT VERBESSERTEN KLEBEEIGENSCHAFTEN**
CURABLE PRESSURE-SENSITIVE ADHESIVE WITH IMPROVED ADHESIVE PROPERTIES
MATIÈRE ADHÉSIVE DURCISSABLE À PROPRIÉTÉS ADHÉSIVES AMÉLIORÉES

(30) Priorität: 28.09.2022 DE 102022124904
(43) Veröffentlichungstag der Anmeldung: 03.04.2024
(73) Patentinhaber: tesa SE, 22848 Norderstedt (DE)
(72) Erfinder: SCHUH, Christian, 22848 Norderstedt (DE); HEIDSIECK, Sven, 22848 Norderstedt (DE); BRINSTER, Oleg, 22848 Norderstedt (DE)
(74) Vertreter: tesa SE

(56) Entgegenhaltungen:
- EP-A1- 3 091 059
- DE-A1- 102015 217 860

## Beschreibung

Die Erfindung betrifft eine aushärtbare Haftklebemasse und ein Haftklebeband umfassend eine entsprechende aushärtbare Haftklebemasse sowie eine Verwendung entsprechender aushärtbarer Haftklebemassen und Haftklebebänder zur Verklebung von zwei oder mehr Komponenten.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar. Aus dem Alltag sind insbesondere Haftklebebänder bekannt, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Insbesondere für den Einsatz in der industriellen Fertigungstechnik ist jedoch auch eine weitere Art von Klebebändern von großer Bedeutung. In diesen Klebebändern, die teilweise auch als reaktive Klebebänder bezeichnet werden, wird eine aushärtbare Klebemasse eingesetzt. Entsprechende aushärtbare Klebemassen haben in dem für die Applikation vorgesehenen Zustand noch nicht ihren maximalen Vernetzungsgrad erreicht und können durch äußere Einflüsse ausgehärtet werden, indem die Polymerisation in der aushärtbaren Klebemasse initiiert und dadurch der Vernetzungsgrad erhöht wird. Hierbei verändern sich die mechanischen Eigenschaften der nunmehr ausgehärteten Klebemasse, wobei insbesondere die Viskosität, die Oberflächenhärte und die Festigkeit zunehmen.

Aushärtbare Klebemassen sind im Stand der Technik bekannt und können aus chemischer Sicht sehr unterschiedliche Zusammensetzungen aufweisen. Diesen aushärtbaren Klebemassen ist gemein, dass die Vernetzungsreaktion durch externe Einflussfaktoren ausgelöst werden kann, beispielsweise durch Energiezufuhr, insbesondere durch Temperatur-, Plasma- oder Strahlenhärtung, und/oder den Kontakt mit einer die Polymerisation fördernden Substanz, wie es beispielsweise bei feuchtigkeitshärtenden Klebemassen der Fall ist. Beispielhafte Klebemassen sind beispielsweise in der DE 102015217860 A1, DE 102015222028 A1, EP 3091059 A1, EP 3126402 B1, EP 2768919 B1, DE 102018203894 A1, WO 2017174303 A1, JP 2021166289 A und US 4661542 A offenbart.

Unter anwendungstechnischen Gesichtspunkten sind insbesondere solche reaktiven Klebemassen besonders bevorzugt, die eine gute Aushärtbarkeit mit haftklebrigen Eigenschaften kombinieren. Solche reaktiven Haftklebemassen und darauf basierende Haftklebebänder können vor der Aushärtung zuverlässig und leicht appliziert werden, wobei ggf. auch noch Korrekturen an der Positionierung möglich sind, bevor die reaktive Haftklebemasse ausgehärtet wird. Dabei erlaubt die Haftklebrigkeit entsprechender reaktiver Haftklebemassen zudem eine leichte Vorfixierung von zu verklebenden Elementen.

In der Praxis ist es für den Fachmann bei der Konzeption leistungsfähiger reaktiver Haftklebemassen dabei regelmäßig nicht trivial, gleichzeitig sowohl eine vorteilhafte Haftklebrigkeit mit einer günstigen Kohäsion der Klebemasse und einer hohen Klebkraft zu erreichen und zudem eine ausgezeichnete Verklebungsfestigkeit im ausgehärteten Zustand sowie eine vorteilhafte Aushärtungskinetik sicherzustellen, was zuweilen sogar als Zielkonflikt empfunden wird.

Im Bereich der Klebetechnik besteht vor diesem Hintergrund ein fortgesetztes Interesse daran reaktive Haftklebemassen dahingehend zu verbessern, dass diese eine verbesserte Haftklebrigkeit mit hohen Klebekräften sowie nach Aushärtung zudem eine verbesserte Verklebungsfestigkeit zeigen.

Die primäre Aufgabe der vorliegenden Erfindung war es, die Nachteile des Standes der Technik zu beseitigen oder zumindest zu verringern.

Insbesondere war es die Aufgabe der vorliegenden Erfindung, eine aushärtbare Haftklebemasse anzugeben, die nicht nur über eine vorteilhafte Haftklebrigkeit verfügt und im unausgehärteten Zustand eine ausgezeichnete Klebkraft aufweist, sondern die zudem im ausgehärteten Zustand auch eine vorteilhafte Verklebungsfestigkeit zeigt.

Hierbei war es eine Aufgabe der vorliegenden Erfindung, dass die anzugebende aushärtbare Haftklebemasse zuverlässig und mit einer günstigen Aushärtungskinetik durch Strahlungshärtung aushärtbar sein sollte, insbesondere auch beim Einsatz von typischen UV-LEDs als Strahlungsquelle.

Es war eine weitere Aufgabe der vorliegenden Erfindung, dass die anzugebende aushärtbare Klebemasse eine größtmögliche Flexibilität hinsichtlich der chemischen Zusammensetzung und damit hinsichtlich der im Zuge der Aushärtung erreichbaren physikalisch-chemischen Eigenschaften, insbesondere bezüglich der erreichbaren Verklebungsfestigkeit, aufweisen sollte. Insbesondere sollte die anzugebende aushärtbare Klebemasse möglichst weitgehend auch aus solchen Komponenten herstellbar sein, die für herkömmliche aushärtbare Klebemasse verwendet werden.

Es war eine ergänzende Aufgabe der vorliegenden Erfindung, ein vorteilhaftes reaktives Klebeband bzw. Haftklebband bereitzustellen. Es war eine zusätzliche Aufgabe der vorliegenden Erfindung, eine vorteilhafte Verwendung entsprechender aushärtbarer Haftklebemassen und daraus hergestellter Haftklebebänder zur Verklebung von zwei oder mehr Komponenten anzugeben.

Die Erfinder der vorliegenden Erfindung haben nunmehr gefunden, dass sich die vorstehend beschriebenen Aufgaben überraschenderweise lösen lassen, wenn in epoxid-basierten aushärtbaren Haftklebemassen, welche über einen kationischen Photoinitiator härten, epoxymodifizierte Nitrilkautschuke eingesetzt werden, wie es in den Ansprüchen definiert ist. Hierdurch werden überraschenderweise aushärtbare Haftklebemassen erhalten, die über vorteilhafte haftklebrige Eigenschaften verfügen und zugleich im ausgehärteten Zustand eine hohe Verklebungsfestigkeit aufweisen. Dies ist insbesondere deshalb überraschend, da andere Nitrilkautschuk-basierte Zusätze im Stand der Technik für aushärtbare Klebemassen, bei denen es sich nicht um Haftklebemassen handelt, als Additive zur Verzögerung der Aushärtungsreaktion eingesetzt wurden, wie es in der EP 0429250 A2 offenbart ist. Entsprechend war eine Verbesserung der haftklebrigen Eigenschaften für den Fachmann nicht zu erwarten, während die beobachtete Steigerung der Verklebungsfestigkeit angesichts der aushärtungsbehindernden Wirkung der artverwandten Verbindungen sogar völlig unerwartet ist.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Haftklebebänder und Verwendungen ergeben sich aus den Merkmalen bevorzugter aushärtbarer Haftklebemassen.

Insoweit nachfolgend für ein Element, beispielsweise für die (Co-)Polymere oder die polymerisierbaren Epoxid-Verbindungen, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft eine aushärtbare Haftklebemasse, umfassend bezogen auf die Gesamtmasse der aushärtbaren Haftklebemasse:
a) ein oder mehrere filmbildende (Co-)Polymere in einem kombinierten Massenanteil im Bereich von 20 bis 60 %,
b) eine oder mehrere polymerisierbare Epoxid-Verbindungen in einem kombinierten Massenanteil im Bereich von 20 bis 60 %, wobei die Epoxid-Verbindungen ausgewählt sind aus der Gruppe bestehend aus monomeren und oligomeren Epoxid-Verbindungen,
c) einen oder mehrere kationische Photoinitiatoren in einem kombinierten Massenanteil im Bereich von 0,5 bis 7 %, und
d) einen oder mehrere epoxymodifizierte Nitrilkautschuke in einem kombinierten Massenanteil im Bereich von 3 bis 30 %.

Aushärtbare Klebemassen im Allgemeinen und aushärtbare Haftklebemassen im Speziellen, sind dem Fachmann, wie vorstehend beschrieben, aus dem Stand der Technik umfassend bekannt, wobei auch die vorstehend angegebenen Einzelkomponenten dem Fachmann isoliert bekannt und in verschiedenen Variationen von verschiedenen Anbietern kommerziell erhältlich sind, wobei nachfolgend zudem bevorzugte und beispielhafte Vertreter für die einzelnen Komponenten offenbart werden.

Diese vorstehend definierten Bestandteile werden in Übereinstimmung mit dem fachmännischen Verständnis jeweils als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge. Beispielsweise kann die aushärtbare Haftklebemasse als polymerisierbare Epoxid-Verbindung ausschließlich Epoxycyclohexylmethyl-3',4'-epoxycyclohexancarboxylat umfassen, was bedeuten würde, dass die aushärtbare Haftklebemasse eine Vielzahl der entsprechenden Moleküle umfasst.

In branchenüblicher Weise werden dabei die Massenanteile als kombinierte Massenanteile der einen oder der mehreren Komponenten angegeben, wodurch ausgedrückt wird, dass der Massenanteil der entsprechend ausgebildeten Komponenten zusammengenommen die entsprechenden Kriterien erfüllt, wobei in Abwesenheit anderer Angaben jeweils die Masse der aushärtbaren Haftklebemasse das Bezugssystem ist.

Die erfindungsgemäße aushärtbare Klebemasse ist aushärtbar. Durch die Möglichkeit zur Härtung kann die aushärtbare Klebemasse nach der Härtung als Strukturklebstoff fungieren. Nach DIN EN 923:2016-03 sind Strukturklebstoffe nachweisbar geeignet zur Herstellung lasttragender Konstruktionen, bei denen die Klebverbindung über längere Zeiträume mit einem hohen Prozentwert der maximalen Bruchkraft ohne Versagen beansprucht werden kann (nach ASTM-Definition: "bonding agents used for transferring required loads between adherends exposed to service environments typical for the structure involved"). Es sind also Klebstoffe für chemisch und physikalisch hoch beanspruchbare Klebungen, die im ausgehärteten Zustand zur Verfestigung der Klebebänder beitragen.

Eine Haftklebemasse ist in Übereinstimmung mit dem fachmännischen Verständnis, unabhängig von einer etwaigen Aushärtbarkeit, eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G`) und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec G' und G" jeweils zumindest zum Teil im Bereich von 10³ bis 10⁷ Pa liegen.

Nachfolgend werden die in der erfindungsgemäßen aushärtbaren Haftklebemasse enthaltenen Komponenten näher erläutert. Insoweit ist es den Erfindern gelungen, jeweils besonders bevorzugte Ausgestaltungen und Massenanteile für die einzelnen Komponenten zu identifizieren, mit denen sich leistungsfähige erfindungsgemäße aushärtbare Klebemasse erhalten lassen.

Die erfindungsgemäße aushärtbare Haftklebemasse umfasst ein oder mehrere (Co-)Polymere. Der Fachmann versteht, dass den (Co-)Polymeren in üblicher Weise die Rolle des Filmbildners zufällt, die insbesondere deshalb von Bedeutung ist, da eine Haftklebemasse erhalten werden soll. Bevorzugt ist dabei eine erfindungsgemäße aushärtbare Haftklebemasse, wobei das eine oder die mehreren (Co-) Polymere ausgewählt sind aus der Gruppe bestehend aus Poly(meth)acrylaten, Polyurethanen, Polyvinylacetalen, wie z.B. Polyvinylbutyral, Polysiloxanen, Synthesekautschuken, Polyestern, Phenoxypolymeren, Polyvinylalkoholen, Polyvinylalkoholcopolymere, und Alken-Vinylacetat-Copolymeren, bevorzugt ausgewählt sind aus der Gruppe bestehend aus Poly(meth)acrylaten, Phenoxypolymeren, Polyvinylalkoholen, Polyvinylalkoholcopolymeren, Polyvinylacetalen, wie z.B. Polyvinylbutyral, und Ethylen-Vinylacetat-Copolymeren (EVA oder EVAC, Poly(ethylen-co-vinylacetat)), insbesondere ausgewählt sind aus der Gruppe bestehend aus Poly(meth)acrylaten, Phenoxypolymeren und Ethylen-Vinylacetat-Copolymeren.

Zusätzlich oder alternativ können als (Co-)Polymere auch Blockcopolymere, bspw. (Meth)acrylat-Blockcopolymere eingesetzt werden. Entsprechende Beispiele sind beispielsweise in den Dokumenten US 2011003947 A1, US 20080200589 A1, US 2007078236 A1, US 2007078236 A1, US 2012196952 A1, US 2016032157 A1, US 2008146747 A1 und US 2016230054 A1 offenbart.

Die zahlenmittleren Molmassen Mₙ der (Co-)Polymere liegen bevorzugt in einem Bereich von 50.000 bis 10.000.000 g/mol, besonders bevorzugt in einem Bereich von 100.000 bis 5.000.000 g/mol, ganz besonders bevorzugt in einem Bereich von 150.000 bis 2.000.000 g/mol. Die Angaben der zahlenmittleren Molmasse Mₙ beziehen sich dabei auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, 8,0 mm * 50 mm (Angaben hier und im Folgenden in der Reihenfolge: Typ, Partikelgröße, Porosität, Innendurchmesser * Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung) und sonst (Harze, Elastomere) gegen PS-Standards (Polystyrol-Kalibrierung).

Bevorzugt ist unabhängig von der spezifischen Auswahl der (Co-)Polymere eine erfindungsgemäße aushärtbare Haftklebemasse, wobei der kombinierte Massenanteil der (Co-)Polymere in der aushärtbaren Haftklebemasse im Bereich von 20 bis 55 %, bevorzugt im Bereich von 20 bis 50 %, besonders bevorzugt im Bereich von 25 bis 50 %, ganz besonders bevorzugt im Bereich von 25 bis 45 %, überaus bevorzugt im Bereich von 30 bis 45 %, liegt, bezogen auf die Masse der aushärtbaren Haftklebemasse.

Die erfindungsgemäße aushärtbare Haftklebemasse umfasst neben den (Co-)Polymeren auch zumindest eine polymerisierbare Epoxid-Verbindung. Diese Epoxid-Verbindungen bilden zusammen den vom Fachmann häufig als Reaktivharz bezeichneten Teil der aushärtbaren Haftklebemasse.

Der Ausdruck "polymerisierbar" bezieht sich hierbei in Übereinstimmung mit dem fachmännischen Verständnis auf die Fähigkeit dieser Verbindungen, ggf. nach geeigneter Aktivierung, eine Polymerisationsreaktion einzugehen. Im Falle der polymerisierbaren Epoxid-Verbindungen wird die Polymerisierbarkeit beispielsweise durch die Epoxid-Gruppen ermöglicht.

In Übereinstimmung mit dem fachmännischen Verständnis sind Epoxid-Verbindungen solche Verbindungen, die zumindest eine Oxiran-Gruppe tragen. Der Fachmann versteht, dass auch die in erfindungsgemäßen aushärtbaren Haftklebemassen einzusetzenden epoxymodifizierten Nitrilkautschuke Oxiran-Gruppe tragen und demgemäß Epoxid-haltige Verbindungen sind, die in Polymerisationsreaktionen teilnehmen können. Im Sinne der vorliegenden Erfindung sind diese epoxymodifizierten Nitrilkautschuke aber keine polymerisierbaren Epoxid-Verbindungen gemäß Punkt b), da für diese zusätzlich definiert ist, dass es sich um monomeren bzw. oligomeren Epoxid-Verbindungen, handelt. Im Gegensatz hierzu sind die epoxymodifizierten Nitrilkautschuke, wie für Kautschuke typisch, polymere Verbindungen, die entsprechend nicht den polymerisierbaren Epoxid-Verbindungen gemäß Punkt b) zugerechnet werden. Vor diesem Hintergrund sind erfindungsgemäße aushärtbare Haftklebemassen besonders bevorzugt, wobei die eine oder die mehreren polymerisierbaren Epoxid-Verbindungen ausgewählt sind aus der Gruppe bestehend aus polymerisierbaren Epoxid-Verbindungen mit einer gewichtsmittleren Molmasse M_{w}, gemessen mittels GPC, im Bereich von 300 bis 2000 g/mol, bevorzugt im Bereich von 300 bis 1500 g/mol, besonders bevorzugt im Bereich von 350 bis 1300 g/mol. Besonders bevorzugt ist zusätzlich oder alternativ auch eine erfindungsgemäße aushärtbare Haftklebemassen, wobei die eine oder die mehreren polymerisierbaren Epoxid-Verbindungen ausgewählt sind aus der Gruppe bestehend aus polymerisierbaren Epoxid-Verbindungen mit einer gewichtsmittleren Molmasse M_{w}, gemessen mittels GPC, von 2000 g/mol oder weniger.

Die polymerisierbaren Epoxid-Verbindungen können beispielsweise aromatischer oder aliphatischer, insbesondere cycloaliphatischer, Natur sein. Polymerisierbare Epoxid-Verbindungen weisen häufig im Durchschnitt wenigstens zwei Epoxidgruppen pro Molekül, vorzugsweise mehr als zwei Epoxidgruppen pro Molekül, auf. Bevorzugt ist insoweit eine erfindungsgemäße aushärtbare Haftklebemasse, wobei die eine oder die mehreren polymerisierbaren Epoxid-Verbindungen ausgewählt sind aus der Gruppe bestehend aus Epoxid-Verbindungen mit zwei oder mehr Epoxidgruppen, bevorzugt zwei Epoxidgruppen.

Beispielhafte polymerisierbare Epoxid-Verbindungen umfassen Epoxycyclo-hexancarboxylate, wie beispielsweise 4-Epoxycyclohexylmethyl-3,4-epoxycyclohexancarboxylat, 3,4-Epoxy-2-methylcyclohexyl-methyl-3,4-epoxy-2-methylcyclohexancarboxylat und Bis(3,4-epoxy-6-methylcyclohexylmethyl)adipat. Weitere Beispiele für polymerisierbare Epoxid-Verbindungen sind beispielsweise in der US 3,117,099 A offenbart. Weitere polymerisierbare Epoxid-Verbindungen, die bei der Anwendung dieser Erfindung besonders nützlich sind, umfassen Glycidylethermonomere, wie sie beispielsweise in der US 3,018,262 offenbart sind. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol) propan), erhalten werden. Insbesondere Diglycidylether von Bisphenolen, wie z.B. Bisphenol-A (4,4'-(Propan-2,2-diyl)diphenol) und Bisphenol-F (Bis(4-hydroxyphenyl)methan). Solche Reaktionsprodukte sind kommerziell in unterschiedlichen Molekulargewichten und Aggregatzuständen erhältlich (beispielsweise sogenannte Typ 1 bis Typ 10 BADGE-Harze). Typische Beispiele für flüssige Bisphenol-A-Diglycidylether sind Epikote 828, D.E.R.331, Araldite GY 250CH und Epon 828. Typische feste BADGE-Harze sind Araldite GT6071, GT7072, Epon 1001 und D.E.R. 662. Weitere Umsetzungsprodukte von Phenolen mit Epichlorhydrin sind die Phenol- und Cresolnovolakharze wie z.B. die Epiclon Typen oder Araldite EPN und ECN Typen (z.B. ECN1273).

Bevorzugt ist dabei nach Einschätzung der Erfinder eine erfindungsgemäße aushärtbare Haftklebemasse, wobei die eine oder die mehreren polymerisierbaren Epoxid-Verbindungen ausgewählt sind aus der Gruppe bestehend aus Epoxid-Verbindungen mit zumindest einer cycloaliphatischen Gruppe, insbesondere einer Cyclohexylgruppe oder Dicyclopentadienylgruppe. Bevorzugt ist zusätzlich oder alternativ eine erfindungsgemäße aushärtbare Haftklebemasse, wobei die eine oder die mehreren polymerisierbaren Epoxid-Verbindungen ausgewählt sind aus der Gruppe bestehend aus Bisphenol-A-Diglycidylethern und Bisphenol-F-Diglycidylethern, bevorzugt Bisphenol-A-Diglycidylethern.

Nach Einschätzung der Erfinder lassen sich besonders vorteilhafte aushärtbare Haftklebemasse erhalten, wenn zwei oder mehr verschiedene polymerisierbare Epoxid-Verbindungen eingesetzt werden, insbesondere wenn sich diese bei Raumtemperatur hinsichtlich ihres Aggregatzustandes unterscheiden. Bevorzugt ist eine erfindungsgemäße aushärtbare Haftklebemasse, wobei die aushärtbare Haftklebemasse eine oder mehrere polymerisierbare Epoxid-Verbindungen umfasst, die ausgewählt sind aus der Gruppe von Epoxid-Verbindungen, die bei 25 °C Feststoffe oder hochviskose Stoffe mit einer dynamischen Viskosität von 50 Pa s oder mehr, bevorzugt 100 Pa s oder mehr, besonders bevorzugt 150 Pa s oder mehr, sind, und/oder wobei die aushärtbare Haftklebemasse eine oder mehrere polymerisierbare Epoxid-Verbindungen umfasst, die ausgewählt sind aus der Gruppe von Epoxid-Verbindungen, die bei 25 °C eine Flüssigkeit mit einer dynamischen Viskosität von 40 Pa s oder weniger, bevorzugt 20 Pa s oder weniger, ganz besonders bevorzugt 10 Pa s oder weniger, sind. Im Rahmen der vorliegenden Erfindung wird die dynamische Viskosität dabei gemäß der DIN 53019-1 aus 2008; bei 25 °C, mit einer Schergeschwindigkeit von 1 s⁻¹ bestimmt.

Bevorzugt ist unabhängig von der spezifischen Auswahl der polymerisierbaren Epoxid-Verbindungen eine erfindungsgemäße aushärtbare Haftklebemasse, wobei der kombinierte Massenanteil der polymerisierbaren Epoxid-Verbindungen in der aushärtbaren Haftklebemasse im Bereich von 30 bis 60 %, bevorzugt im Bereich von 30 bis 55 %, besonders bevorzugt im Bereich von 35 bis 55 %, ganz besonders bevorzugt im Bereich von 35 bis 50 %, liegt, bezogen auf die Masse der aushärtbaren Haftklebemasse.

Als weiteren Bestandteil umfasst die erfindungsgemäße aushärtbare Haftklebemasse zumindest einen epoxymodifizierten Nitrilkautschuk. Epoxymodifizierte Nitrilkautschuke sind insbesondere flüssige, in der Regel hochviskose, polymere Epoxidharze, mit einem Grundgerüst aus Nitrilkautschuk, welches mit Epoxid-Gruppen modifiziert ist, die über eine Modifizierung mit Epoxidharzen bzw. Epoxid-Prepolymeren eingebaut werden, wobei der Massenanteil des Nitrilkautschuks bevorzugt im Bereich von 5 bis 50 %, besonders bevorzugt im Bereich von 10 bis 40, liegt, bezogen auf die Masse des epoxymodifizierten Nitrilkautschuks. In Übereinstimmung mit dem fachmännischen Verständnis bezeichnet der Ausdruck "epoxymodifizierter Nitrilkautschuk" somit Umsetzungsprodukte von, gegebenenfalls funktionalisierten, Nitrilkautschuken mit Epoxidharzen. Um eine gute Mischbarkeit mit dem relativ polaren Epoxidharzen bzw. Epoxid-Prepolymeren zu erzielen, enthalten die dem epoxymodifizierten Nitrilkautschuk zu Grunde liegenden Nitrilkautschuk Polymere einen Massenanteil an Acrylnitril von mindestens 20 % und maximal 50 %, insbesondere liegt der Massenanteil an Acrylnitril im Bereich von 25 % und 40 %. Der Ausdruck Nitrilkautschuk ist dem Fachmann dabei bekannt und bezeichnet Butadien-Acrylnitril-Copolymere. Zum Anbinden der Epoxid-Gruppen an das Butadien-Acrylnitril-Copolymer können bei der Herstellung ein oder mehrere weitere Monomere mit einer funktionellen Gruppe, beispielsweise einer Carbonsäuregruppe, beispielsweise Acrylsäure, mit einpolymerisiert werden. Aus der Carbonsäure und den Nitrilkautschuken werden beispielsweise sogenannte carboxy-terminierte-Nitrilkautschuke (CTBN) oder carboxylierte Nitrilkautschuke als Vorläufer der epoxymodifizierten Nitrilkautschuke erhalten, wobei die Carbonsäuregruppen zusätzlich oder alternativ auch in der Polymerkette vorliegen können. CTBN sind auch kommerziell erhältlich und werden beispielweise unter dem Handelsnamen Hycar von der Firma B. F. Goodrich angeboten. Diese haben beispielsweise gewichtsmittlere Molmassen im Bereich von 2000 bis 5000 g/mol und Acrylnitrilgehalte im Bereich von 10 bis 30 %. Konkrete Beispiele sind Hycar CTBN 1300 x 8, 1300 x 13 oder 1300 x 15. Durch die Umsetzung von CTBN mit Epoxidharzen bzw. Epoxidprepolymeren können unter geeigneten Bedingungen epoxymodifizierte Nitrilkautschuke, bspw. epoxy-terminierte-Nitrilkautschuke (ETBN), erhalten werden. Kommerziell sind solche epoxymodifizierte Nitrilkautschuke, insbesondere ETBN, beispielsweise von der Firma Emerald Materials unter dem Namen HYPRO ETBN (vorher Hycar ETBN) erhältlich, beispielsweise unter den Handelsnamen Hypro 1300X40 ETBN, Hypro 1300X63 ETBN und Hypro 1300X68 ETBN. Zudem sind solche epoxymodifizierten Nitrilkautschuke von der Firma Schill+Seilacher "Struktol" GmbH unter dem Handelsnamen Polydis, beispielsweise unter der Bezeichnung Polydis 3604 oder 3605, 3606, 3610, 3611, 3614, 3615, 3616, 3618, 3633, 3636, 3652, 3670, 3691, 3693, 3694 S, 3695 oder 3696 S erhätlich. Epoxymodifizierte Nitrilkautschuke werden zuweilen auch als Nitrikautschukmodifiziertes Epoxidharz angeboten, wobei die Bezeichnung insbesondere eine Frage des Blickwinkels ist und sich nach Einschätzung der Erfinder in vielen Fällen vor allem am Massenanteil der miteinander umgesetzten Komponenten orientiert.

Bevorzugt ist nach Einschätzung der Erfinder eine erfindungsgemäße aushärtbare Haftklebemasse, wobei die eine oder die mehreren epoxymodifizierten Nitrilkautschuke ausgewählt sind aus der Gruppe bestehend aus epoxymodifizierten Nitrilkautschuken mit einer mittleren Funktionalität von 2 oder mehr, bevorzugt 2,5 oder mehr, besonders bevorzugt 3 oder mehr. Bevorzugt ist zusätzlich oder alternativ eine erfindungsgemäße aushärtbare Haftklebemasse, wobei die eine oder die mehreren epoxymodifizierten Nitrilkautschuke ausgewählt sind aus der Gruppe bestehend aus epoxymodifizierten Nitrilkautschuken mit endständig und/oder in der Kette angeordneten Epoxidgruppen.

Besonders bevorzugt ist nach Einschätzung der Erfinder insbesondere auch eine erfindungsgemäße aushärtbare Haftklebemasse, wobei die eine oder die mehreren epoxymodifizierten Nitrilkautschuke ausgewählt sind aus der Gruppe bestehend aus epoxymodifizierten Nitrilkautschuken mit eine gewichtsmittlere Molmasse M_{w}, gemessen mittels GPC, im Bereich von 5000 bis 35000 g/mol, bevorzugt im Bereich von 10000 bis 30000 g/mol, besonders bevorzugt im Bereich von 15000 bis 25000 g/mol.

Die Erfinder haben festgestellt, dass überraschenderweise insbesondere solche epoxymodifizierten Nitrilkautschuke zu verbesserten Klebkräften führen, die in der GPC mindestens eine bimodale Verteilung aufzeigen. Ohne an diese Theorie gebunden sein zu wollen nehmen die Erfinder an, dass so ein ausgewogenes Verhältnis zwischen adhäsiven und kohäsiven Eigenschaften erzielt wird. Unter "mindestens bimodal" verstehen die Erfinder dabei GPC Kurven, die mehr als ein Maximum enthalten bzw. deren mathematische Ableitung der Molekulargewichtsverteilung mindestens zweimal die x-Achse schneidet. Bevorzugt ist somit eine erfindungsgemäße aushärtbare Haftklebemasse, wobei die eine oder die mehreren epoxymodifizierten Nitrilkautschuke ausgewählt sind aus der Gruppe bestehend aus epoxymodifizierten Nitrilkautschuken mit einer zumindest bimodalen Verteilung der gewichtsmittleren Molmasse.

Da GPC Ergebnisse nur relative Angaben über das Molekulargewicht ermöglichen und die gemessenen Werte und Güte der Auflösung stark von der Art der Säulen abhängen, können die als bevorzugt angesehenen gewichtsmittleren Molmassenverteilungen relativ zum Hochpunkt der höchstmolekularen Anteile charakterisiert werden. Besonders bevorzugt sind nämlich solche epoxymodifizierten Nitrilkautschuke, die in der GPC neben dem höchstmolekularen Hochpunkt noch mindestens 2 weitere Maxima der Molmasse aufzeigen. Solche speziellen Molekulargewichtsverteilungen lassen sich beispielsweise in Verfahren erhalten, bei denen CTBN mit Epoxidharzen umgesetzt werden und über Zugabe von Diolen oder Polyolen wie z.B. Bisphenol-A kettenverlängert werden.

Besonders bevorzugt ist zusätzlich oder alternativ auch eine erfindungsgemäße aushärtbare Haftklebemasse, wobei die eine oder die mehreren epoxymodifizierten Nitrilkautschuke ausgewählt sind aus der Gruppe bestehend aus epoxymodifizierten Nitrilkautschuke mit einer gewichtsmittleren Molmasse M_{w}, gemessen mittels GPC, von mehr als 2000 g/mol.

Bevorzugt ist unabhängig von der spezifischen Auswahl der epoxymodifizierten Nitrilkautschuke eine erfindungsgemäße aushärtbare Haftklebemasse, wobei der kombinierte Massenanteil der epoxymodifizierten Nitrilkautschuke in der aushärtbaren Haftklebemasse im Bereich von 3,5 bis 25 %, bevorzugt im Bereich von 4 bis 20 %, besonders bevorzugt im Bereich von 4,5 bis 18 %, liegt, bezogen auf die Masse der aushärtbaren Haftklebemasse.

Die erfindungsgemäßen aushärtbaren Haftklebemasse umfassen zumindest einen kationischen Photoinitiator. Entsprechende kationische Photoinitiatoren sind dem Fachmann ausgehend von seinem allgemeinen Fachwissen bekannt und insbesondere im Bereich der Epoxid-basierten reaktiven Klebemasse häufig im Einsatz. Der Fachmann stimmt das zur Aushärtung verwendete Katalysatorsystem im Wesentlichen auf die Anwendungsanforderungen, insbesondere auf die für die spätere Aktivierung der Aushärtung vorgesehene Wellenlänge, und die eingesetzten polymerisierbaren Epoxid-Verbindungen ab.

Als Initiatoren für eine solche kationische strahlungsbasierte, d.h. häufig UV induzierte, Härtung von Epoxid-Verbindungen sind insbesondere Sulfonium, lodonium und Metallocen basierende Systeme einsetzbar. Für Beispiele für Sulfonium basierende Kationen sei auf die Ausführungen in US 6,908,722 B1 verwiesen. Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Zudem sind insbesondere für lodonium-basierende Initiatoren auch Chlorid, Bromid oder Iodid als Anionen denkbar, wobei aber Initiatoren, die im Wesentlichen frei von Chlor und Brom sind, bevorzugt sind. Ein leistungsfähiges Beispiel für ein solches System ist beispielsweise Triphenylsulfoniumhexafluoroantimonat. Weitere geeignete Initiatoren sind beispielsweise in der US 3,729,313 A, US 3,741,769 A, US 4,250,053 A, US 4,394,403 A, US 4,231,951 A, US 4,256,828 A, US 4,058,401 A, US 4,138,255 A und US 2010/063221 A1 offenbart.

Konkrete Beispiele für einsetzbare Sulfonium-Salze sind insbesondere Triarylsulfonium-Salze, beispielsweise Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Chlorophenyldiphenylsulfoniumhexafluoroantimonat, Tris-(4-phenoxyphenyl)-sulfonium-hexafluorophosphat, Di-(4-ethoxyphenyl)-methylsulfoniumhexafluoroarsenat, 4-Acetylphenyldiphenylsulfoniumtetrafluoroborat, 4-Acetylphenyldiphenylsulfoniumtetrakis-(pentafluorobenzyl)-borat, Tris-(4-thiomethoxyphenyl)-sulfoniumhexafluorophosphat, Di-(methoxysulfonylphenyl)-methylsulfonium-hexafluoroantimonat, Di-(methoxynaphthyl)-methylsulfoniumtetrafluoroborat, Di-(methoxynaphthyl)-methylsulfoniumetrakis-(penta-fluorobenzyl)-borat, Di-(carbomethoxyphenyl)-methylsulfoniumhexa-fluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecyl-phenyl)-sulfoniumtetrakis-(3,5-bis-trifluoromethylphenyl)-borat, 4-Acetamidphenyldiphe-nylsulfoniumtetrafluoroborat, 4-Acetamidphenyldiphenylsulfoniumtetrakis-(pentafluoro-benzyl)-borat, Dimethylnaphthylsulfoniumhexafluorophosphat, Trifluoromethyldiphenyl-sulfoniumtetrafluoroborat, Trifluoro-methyldiphenylsulfoniumtetrakis-(pentafluorobenzyl)-borat, Phenylmethylbenzylsulfoniumhexafluorophosphat, 5-Methylthianthreniumhexa-fluorophosphat, 10-Phenyl-9,9-dimethylthioxanthenium-hexafluorophosphat, 10-Phenyl-9-oxothioxantheniumtetrafluoroborat, 10-Phenyl-9-oxothioxantheniumtetrakis-(pentafluoro-benzyl)-borat, 5-Methyl-10-oxothianthreniumtetrafluoroborat, 5-Methyl-10-oxothianthreni-umtetrakis-(pentafluorobenzyl)-borat und 5-Methyl-10,10-dioxothianthrenium-hexafluorophosphat.

Konkrete Beispiele für einsetzbare lodonium-Salze sind Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluorophosphat, 3,5-Dimethylpyrazolyl-4-phenyliodoniumhexafluorophosphat, Diphenyliodoniumhexafluoroantimonat, 2,2'-Diphenyliodoniumtetrafluoroborat, Di-(2,4-dichlorphenyl)-iodoniumhexafluorophosphat, Di-(4-bromphenyl)-iodoniumhexafluorophosphat, Di-(4-methoxyphenyl)-iodoniumhexafluorophosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluoro-phosphat, Di-(2-benzothienyl)-iodoniumhexafluorophosphat, Diaryliodoniumtristrifluormethylsulfonylmethid wie Diphenyliodoniumhexafluoroantimonat, Diaryliodoniumtetrakis-(pentafluorophenyl)-borat wie Diphenyliodoniumtetrakis-(pentafluorophenyl)-borat, [4-(2-Hydroxy-n-tetradesiloxy)-phenyl]-phenyliodoniumhexafluoroantimonat, [4-(2-Hydroxy-n-tetradesiloxy)-phenyl]-phenyliodoniumtrifluorosulfonat, [4-(2-Hydroxy-n-tetradesiloxy)-phenyl]-phenyl-iodoniumhexafluorophosphat, [4-(2-Hydroxy-n-tetradesiloxy)-phenyl]-phenyliodoniumtetrakis-(pentafluorophenyl)-borat, Bis-(4-tert-butylphenyl)-iodoniumhexafluoroantimonat, Bis-(4-tert-butylphenyl)-iodoniumhexafluorophosphat, Bis-(4-tert-butylphenyl)-iodoniumtrifluorosulfonat, Bis-(4-tert-butylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluorophosphat, Bis-(dodecylphenyl)-iodoniumtrifluoromethylsulfonat, Di-(dodecylphenyl)-iodoniumhexafluoroantimonat, Di-(dodecylphenyl)-iodoniumtriflat, Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bis-succinimidodiphenyliodoniumbisulfat, 3-Nitrodiphenyliodoniumbisulfat, 4,4'-Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5-bis-trifluoro-methylphenyl)-borat und (Tolylcumyl)-iodoniumtetrakis-(pentafluorophenyl)-borat, und Ferrocenium-Salze (siehe zum Beispiel EP 0 542 716 B1) wie η5-(2,4-cyclopentadien-1-yl)-[(1,2,3,4,5,6,9)-(1-methylethyl)-benzol]-eisen.

Solche kationischen Photoinitiatoren werden typischerweise einzeln oder als Kombination von zwei oder mehreren Photoinitiatoren eingesetzt. Beim Einsatz von Photoinitiatoren sind bei aushärtbaren Klebemassen aus dem Stand der Technik insbesondere auch Kombinationen mit sogenannten Sensitizern für die Anpassung der Aktivierungswellenlänge des Photoinitiationssystems an das gewählte Emissionsspektrum sehr hilfreich, die bspw. in dem Textbuch "Industrial Photoinitiators: A technical guide" 2010 von A.W. Green offenbart werden.

Einige kationische Photoinitiatoren, beispielsweise der unter dem Handelsnamen Deuteron UV 1242 kommerziell erhältliche Photoinitiator, reagiert erst bei relativ kurzen Wellenlängenbereichen im Bereich von 220 bis 250 nm. Eine Aktivierung mittels einer typischen UV-LED, was unter anwendungstechnischen Gesichtspunkten stark bevorzugt wäre, ist hier nicht bzw. zumindest nicht effizient möglich, da das Emissionsmaximum typischer UV-LEDs bei einer Wellenlänge von etwa 365 nm liegt. Um diese kationischen Photoinitiatoren dennoch mit typischen UV-LEDs aktivieren zu können, wird auf das in der Literatur beschriebene Konzept des "radical promoter cationic curing" zurückgegriffen. Hierzu wird als Sensitizer ein Radikalstarter, wie er beispielsweise unter dem Handelsnamen Omnirad BDK oder Irgacure 651 kommerziell erhältlich ist, zugesetzt, der bei Anregung mit höheren Wellenlängen, beispielsweise mit einer für UV-LEDs typischen Wellenlänge von 365 nm, zerfällt. Die auf diese Weise gebildeten Radikale, bzw. anderen aktiven Spezies, aktivieren den kationischen Initiator, der letztlich die Epoxid-Härtung in Gang setzt. Typischerweise beträgt in diesen Fällen des Einsatzes von Sensitizern der Massenanteil von kationischen Photoinitiatoren an der aushärtbaren Haftklebemasse nicht mehr als 4 % aber mindestens 0,1 %, und liegt bevorzugt im Bereich von 0,5 bis 2 %. Der Massenanteil von Sensitizern beträgt dabei üblicherweise nicht mehr als 3 % und liegt bevorzugt im Bereich von 0,5 bis 2 %.

Bevorzugt ist weitgehend unabhängig von der Auswahl des spezifischen kationischen Initiators zunächst eine erfindungsgemäße aushärtbare Haftklebemasse, wobei der kombinierte Massenanteil der kationischen Photoinitiatoren in der aushärtbaren Haftklebemasse im Bereich von 0,5 bis 4 %, bevorzugt im Bereich von 0,5 bis 3 %, besonders bevorzugt im Bereich von 0,5 bis 2 %, liegt, bezogen auf die Masse der aushärtbaren Haftklebemasse.

Wie nachfolgend weiter erläutert, ist es nach Erkenntnis der Erfinder jedoch insbesondere beim Verzicht auf den Einsatz von Sensitizern in vielen Fällen wünschenswert, größere Mengen der kationischen Photoinitiatoren einzusetzen. Bevorzugt ist zusätzlich oder alternativ entsprechend eine erfindungsgemäße aushärtbare Haftklebemasse, wobei der kombinierte Massenanteil der kationischen Photoinitiatoren in der aushärtbaren Haftklebemasse im Bereich von 0,75 bis 6 %, bevorzugt im Bereich von 1 bis 5 %, besonders bevorzugt im Bereich von 1,25 bis 3 %, liegt, bezogen auf die Masse der aushärtbaren Haftklebemasse.

Die Erfinder haben erkannt, dass der überaus vorteilhafte Einsatz von epoxymodifizierten Nitrilkautschuken, der in Kombination mit den anderen Bestandteilen in leistungsfähigen aushärtbaren Haftklebemasse resultiert, die Wirksamkeit von Sensitizern, insbesondere Sensitizern, die über einen radikalischen Mechanismus funktionieren, reduzieren kann. So wird beobachtet, dass eine über einen Sensitizer aktivierte Härtung mit typischen Photoinitiatorsystemen in einigen Fällen nicht bzw. nicht mehr ausreichend funktioniert, wenn der Massenanteil an epoxymodifizierten Nitrilkautschuken sehr hoch gewählt wird. Ohne an diese Theorie gebunden sein zu wollen, nehmen die Erfinder an, dass die im Nitrilkautschuk vorhandenen C=C Doppelbindungen die gebildeten Radikale abfangen können und diese nicht mehr in ausreichender Anzahl zur Verfügung stehen, um den kationischen Initiator zu starten und so den Aushärteprozess zu starten.

Eine Lösung dieses Problems und die Aushärtung der erfindungsgemäßen aushärtbaren Haftklebemasse ist für den Fachmann weiterhin möglich. Eine starke Erhöhung des Gehaltes an Sensitizern, um der Verringerung der Radikalkonzentration bei hohen Gehalten an epoxymodifizierten Nitrilkautschuken entgegenzuwirken, ist jedoch in vielen Fällen nicht gewünscht bzw. nicht zweckmäßig. Ohne eine Anpassung des kationischen Photoinitiators müsste entsprechend auf eine Aktivierung mit elektromagnetischer Strahlung einer zu dem kationischen Photoinitiator passenden Wellenlänge zurückgegriffen werden, um bei hohen Gehalten an epoxymodifizierten Nitrilkautschuken mit diesen kationischen Photoinitiatoren eine gute Aushärtung zu bewirken, was zumindest theoretisch unproblematisch ist.

In der Praxis besteht jedoch ein großes Interesse daran, kostengünstige und leicht verfügbare UV-LEDs einzusetzen, deren Emissionsmaximum zumeist bei einer Wellenlänge von etwa 365 nm liegt. Durch die verringerte Wirksamkeit von Sensitizern ist dies jedoch nicht mehr leicht für sämtliche kationischen Photoinitiatoren zu erreichen. Deshalb schlagen die Erfinder vor, dass zum Erhalt einer erfindungsgemäßen aushärtbaren Haftklebemasse, die auch bei hohen Gehalten an epoxymodifizierten Nitrilkautschuken, d.h. in Massenanteilen von 10 % oder mehr, insbesondere von 15 % oder mehr, zuverlässig mit UV-LEDs ausgehärtet werden kann, auf Photoinitiatoren zurückgegriffen werden sollte, die bei einer Wellenlänge aktivieren, bei denen UV-LEDs noch eine merkliche Emission zeigen. Bevorzugt ist entsprechend eine erfindungsgemäße aushärtbare Haftklebemasse, wobei der eine oder die mehreren kationischen Photoinitiatoren das höchstwellenlängige Absorptionsmaximum bei einer Wellenlänge von 290 nm oder mehr, bevorzugt von 320 nm oder mehr, besonders bevorzugt von 340 nm oder mehr, ganz besonders bevorzugt von 360 nm oder mehr, aufweisen. Die entsprechenden Absorptionscharakteristika und die resultierenden Wellenlängenbereiche sind für kommerziell erhältliche kationische Photoinitiatoren regelmäßig vom Hersteller tabelliert und für den Fachmann zwanglos verfügbar, wobei die Lage des höchstwellenlängigen Absorptionsmaximums im Zweifel durch Messung der Transmission mit einem UV-VIS-Spektrometer bestimmt werden kann, wobei der kationische Photoinitiator in einem geeigneten Lösungsmittel gelöst eingesetzt wird, wobei die Konzentration des kationischen Photoinitiators zweckmäßigerweise so hinreichend niedrig gewählt wird, dass das höchstwellenlängige Absorptionsmaximum mit dem gewählten Messaufbau ausreichend deutlich identifiziert werden kann. Besonders bevorzugt ist vor diesem Hintergrund eine erfindungsgemäße aushärtbare Haftklebemasse, wobei der eine oder die mehreren kationischen Photoinitiatoren ausgewählt sind aus der Gruppe bestehend aus kationischen Photoinitiatoren, deren Gegenion ausgewählt ist aus der Gruppe bestehend aus Hexafluorophsphat, Hexafluoroantimonat und Tetrakispentafluorophenylborat.

Der Fachmann versteht, dass es beim Einsatz von kationischen Photoinitiatoren, die bereits für die gewünschte Wellenlänge ausgelegt sind, angesichts der verringerten Wirksamkeit von Sensitizern bei hohen Gehalten an epoxymodifizierten Nitrilkautschuken sinnvoll ist, auf die Zugabe von solchen Sensitizern ganz zu verzichten. Bevorzugt ist in diesem Fall eine erfindungsgemäße aushärtbare Haftklebemasse, wobei der kombinierte Massenanteil von Sensitizern in der aushärtbaren Haftklebemasse 0,1 % oder weniger, bevorzugt 0,01 % oder weniger, besonders bevorzugt 0,001 % oder weniger, beträgt, bezogen auf die Masse der aushärtbaren Haftklebemasse, wobei die aushärtbare Haftklebemasse ganz besonders bevorzugt im Wesentlichen frei von Sensitizern ist, wobei dies insbesondere beim Einsatz von hohen Gehalten an epoxymodifizierten Nitrilkautschuken, d.h. in Massenanteilen von 10 % oder mehr, insbesondere von 15 % oder mehr, bevorzugt ist.

In eigenen Versuchen haben die Erfinder erkannt, dass es insbesondere beim Verzicht auf Sensitizer zweckmäßig ist, zum Erreichen einer ausgezeichneten Aushärtbarkeit und einer vorteilhaften Verklebungsfestigkeit den Gehalt an kationischem Photoinitiator auf den Gehalt an epoxymodifizierten Nitrilkautschuken abzustimmen. Die Erfinder haben es dabei als vorteilhaft identifiziert, wenn der Gehalt an kationischem Photoinitiator gegenüber den epoxymodifizierten Nitrilkautschuken nicht zu gering gewählt wird. Bevorzugt ist somit zunächst eine erfindungsgemäße aushärtbare Haftklebemasse, wobei der Quotient aus dem kombinierten Massenanteil der kationische Photoinitiatoren geteilt durch den kombinierten Massenanteil der epoxymodifizierten Nitrilkautschuke 0,06 oder mehr, bevorzugt 0,07 oder mehr, besonders bevorzugt 0,08 oder mehr, beträgt, und/oder wobei das Verhältnis der kombinierten Masse der kationischen Photoinitiatoren zu der kombinierten Masse der epoxymodifizierten Nitrilkautschuke 6:100 oder mehr, bevorzugt 7:100 oder mehr, besonders bevorzugt 8:100 oder mehr, beträgt.

Da der Fachmann ein grundsätzliches Interesse daran hat, den Gehalt an kationischen Photoinitiatoren nicht höher als nötig zu wählen, ergeben sich nach Einschätzung der Erfinder hieraus bevorzugte Mengenbereiche. Bevorzugt ist nämlich eine erfindungsgemäße aushärtbare Haftklebemasse, wobei der Quotient aus dem kombinierten Massenanteil der kationische Photoinitiatoren geteilt durch den kombinierten Massenanteil der epoxymodifizierten Nitrilkautschuke im Bereich von 0,06 bis 0,6, bevorzugt im Bereich von 0,07 bis 0,5, besonders bevorzugt im Bereich von 0,08 bis 0,4, liegt, und/oder wobei das Verhältnis der kombinierten Masse der kationischen Photoinitiatoren zu der kombinierten Masse der epoxymodifizierten Nitrilkautschuke im Bereich von 6:100 bis 60:100, bevorzugt im Bereich von 7:100 bis 50:100, besonders bevorzugt im Bereich von 8:100 bis 40:100, liegt.

Als weiteren überraschenden Effekt haben die Erfinder gefunden, dass sich die klebtechnischen Eigenschaften erfindungsgemäßer aushärtbarer Haftklebemassen durch die Zugabe von Farbstoffen verbessern lassen, wobei insbesondere mit blauen Farbstoffen vorteilhafte Effekte beobachtet wurden. Bevorzugt ist vor diesem Hintergrund eine erfindungsgemäße aushärtbare Haftklebemasse, wobei die aushärtbare Haftklebemasse einen oder mehrere Farbstoffe umfasst, bevorzugt in einem kombinierten Massenanteil im Bereich von 0,05 bis 1,0 %, bevorzugt im Bereich von 0,1 bis 0,75 %, besonders bevorzugt im Bereich von 0,2 bis 0,5 %. Besonders bevorzugt ist insoweit eine erfindungsgemäße aushärtbare Haftklebemasse, wobei der eine oder die mehren Farbstoffe ausgewählt sind aus der Gruppe bestehend aus blauen Farbstoffen.

In speziellen Anwendungen kann für die erfindungsgemäße aushärtbare Klebemasse bzw. das Klebeband umfassend die erfindungsgemäße aushärtbare Klebemassen, umfassend einen oder mehrere Farbstoffe, eine Opazität ("Haze") gewünscht sein. Solche spezielle Anwendungen sind zum Beispiel Klebebänder zur elektrischen Isolierung eines Gegenstandes, wie z.B. Batteriezellen. Hier ist eine gewisse Opazität zur Verdeckung optischer Mängel wie z.B. Kratzer wünschenswert. Bevorzugt ist dementsprechend eine erfindungsgemäße aushärtbare Klebemasse, die neben eines oder mehreren Farbstoffen weiterhin ein oder mehrere Additive zur Erhöhung der Opazität umfasst.

Bevorzugt ist zusätzlich oder alternativ eine erfindungsgemäße aushärtbare Haftklebemasse, wobei der eine oder die mehren Farbstoffe ausgewählt sind aus der Gruppe bestehend aus 1,4-Bis(mesitylamino)anthrachinon (CAS: 116-75-6), Benzoyl Leuco-Methylenblau (CAS: 1249-97-4), Leuco-Kristallviolett (CAS: 603-48-5), Kristallviolettlacton (CAS: 1552-42-7), Ethylviolett (CAS: 2390-59-2), Methylviolett (CAS: 8004-87-3), Methylgrün (CAS: 7114-03-6), Ethylgrün (CAS: 14855-76-6), Nilblau (CAS: 2381-85-3 (Hydrochlorid), 3625-57-8 (Sulfat) und CAS: 53340-16-2 (Perchlorat)), Kupferphthalocyanin (CAS 147-14-8), bevorzugt ausgewählt ist aus der Gruppe bestehend aus Benzoyl Leuco-Methylenblau, Leuco-Kristallviolett, Kristallviolettlacton, Ethylviolett, Methylviolett, Methylgrün, Ethylgrün, Nilblau, 1,4-bis(mesitylamino)anthrachinon und Kupferphthalocyanin (CAS 147-14-8). Besonders bevorzugt ist in jedem Fall eine erfindungsgemäße aushärtbare Haftklebemasse, wobei der eine oder die mehren Farbstoffe ausgewählt sind aus der Gruppe bestehend aus 1,4-Bis(mesitylamino)anthrachinon, Ethylviolett und Kupferphthalocyanin.

Es kann als Vorteil der erfindungsgemäßen aushärtbaren Haftklebemassen gesehen werden, dass diese hinsichtlich der Anwesenheit von weiteren Komponenten sehr flexibel sind, wodurch es in vorteilhafter Weise möglich wird, die physikalisch-chemischen Eigenschaften besonders gezielt an die jeweiligen Anforderungen der Anwendungen anzupassen. Bevorzugt ist beispielsweise eine erfindungsgemäße aushärtbare Haftklebemasse, wobei die aushärtbare Haftklebemasse ein oder mehrere Polyole umfasst, bevorzugt in einem kombinierten Massenanteil im Bereich von 0,5 bis 15 %, bevorzugt im Bereich von 1 bis 10 %. Bevorzugt ist zusätzlich oder alternativ auch eine erfindungsgemäße aushärtbare Haftklebemasse, wobei die aushärtbare Haftklebemasse einen oder mehrere weitere Additive umfasst, bevorzugt in einem kombinierten Massenanteil im Bereich von 0,1 bis 50 %, besonders bevorzugt im Bereich von 0,2 bis 40 %, bezogen auf die Masse der aushärtbaren Haftklebemasse, und/oder wobei das eine oder die mehreren weiteren Additive bevorzugt ausgewählt sind aus der Gruppe bestehend aus Klebharzen, Alterungsschutzmitteln, Lichtschutzmitteln, UV-Absorbern, rheologischen Additiven und Additiven zur Erhöhung der Opazität.

In einer bevorzugten Ausführungsform umfasst die erfindungsgemäße aushärtbare Klebemasse einen oder mehreren Farbstoffe und ein oder mehrere Additive zur Erhöhung der Opazität. Besonders vorteilhaft in Bezug auf Aushärtbarkeit der Klebmasse, Farbstärke und Deckkraft haben sich Kombinationen aus einem kombinierten Massenanteil von maximal 0,3 % eines oder mehreren Farbstoffen mit einem kombinierten Massenanteil von maximal 5 % eines oder mehreren Additive zur Erhöhung der Opazität, bezogen auf die Masse der aushärtbaren Klebemasse, gezeigt. Insbesondere bevorzugt sind erfindungsgemäße aushärtbare Klebemasse, wobei der kombinierte Massenanteil der Farbstoffe, insbesondere ausgewählt sind aus der Gruppe bestehend aus blauen Farbstoffen, in der aushärtbaren Klebemasse im Bereich von 0,1 bis 0,25 % und der kombinierte Massenanteil der Additive zur Erhöhung der Opazität, insbesondere von Titandioxid, im Bereich von 0,1 bis 0,3 %, bezogen auf die Masse der aushärtbaren Klebemasse, liegt.

Ein besonderer Fall der weiteren Komponenten, welche der Einstellung der Eigenschaften von Klebemassen dienen, sind unlösliche Füllstoffe, die der aushärtbaren Haftklebemasse zugesetzt werden können, um eine gefüllte aushärtbare Haftklebemasse zu erhalten. Bei diesen handelt es sich um partikuläre Füllstoffe mit einem mittleren Partikeldurchmesser (D50) von 5 µm oder mehr, bevorzugt 10 µm oder mehr, besonders bevorzugt 20 µm oder mehr, die in der aushärtbaren Haftklebemasse nicht löslich sind und in dieser entsprechend als Dispersion vorliegen sowie um makroskopische Füllstoffe wie beispielsweise Fasern. Bevorzugt sind die unlöslichen Füllstoffe ausgewählt aus der Gruppe bestehend aus partikulären Füllstoffen. Besonders bevorzugt sind die unlöslichen Füllstoffe ausgewählt aus der Gruppe bestehend aus expandierbaren Polymerhohlkugeln, nicht expandierbaren Polymerhohlkugeln, Polymervollkugeln, Glashohlkugeln, Glasvollkugeln, keramische Hohlkugeln, keramische Vollkugeln und/oder Kohlenstoffvollkugeln. In Frage kommen als unlösliche Füllstoffe beispielsweise jedoch auch Fasern, Gelege, Plättchen und Stäbchen aus in der aushärtbaren Haftklebemasse unlöslichen Materialien. Durch ihre teilweise schon makroskopischen Abmessungen und die fehlende Löslichkeit haben diese im Wesentlichen keinen Einfluss auf die vorstehend offenbarten Zusammenhänge der Zusammensetzungschemie der aushärtbaren Haftklebemasse, sondern liegen vielmehr in heterogener Mischung mit der aushärtbaren Klebemasse vor. Entsprechend werden diese unlöslichen Füllstoffe im Rahmen der vorliegenden Erfindung nicht der aushärtbaren Haftklebemasse zugerechnet und werden entsprechend bei der Berechnung von Massenanteilen relativ zur Masse der aushärtbaren Haftklebemasse nicht berücksichtigt. Im Rahmen der vorliegenden Erfindung wird vielmehr definiert, dass der Zusatz von unlöslichen Füllstoffen zu einer erfindungsgemäßen aushärtbaren Haftklebemasse in einer gefüllten aushärtbaren Haftklebemasse resultiert, d.h. einer gefüllten aushärtbaren Haftklebemasse, umfassend:
i) eine erfindungsgemäße aushärtbare Haftklebemasse, bevorzugt wie vorstehend als bevorzugt offenbart, und
ii) einen oder mehrere unlösliche Füllstoffe.

Besonders bevorzugt liegt der kombinierte Massenanteil der unlöslichen Füllstoffe dabei im Bereich von 0,1 bis 50 %, bevorzugt im Bereich von 0,15 bis 40 %, besonders bevorzugt im Bereich von 0,2 bis 30 %, bezogen auf die Masse der gefüllten aushärtbaren Haftklebemasse.

Erfindungsgemäße aushärtbare Haftklebemassen können beispielsweise direkt als Haftklebemassen eingesetzt werden, wobei sie je nach Applikationsmethode insbesondere in Form von Bändern bereitgestellt werden können. Die Erfindung betrifft somit auch ein Haftklebeband, insbesondere ein reaktives Haftklebeband, umfassend als Klebeschicht eine erfindungsgemäße aushärtbare Haftklebemasse, wobei das Klebeband bevorzugt eine Trägerschicht umfasst.

Mit Blick auf möglichst günstige Handhabungseigenschaften werden besonders vorteilhafte Resultate regelmäßig dann erzielt, wenn erfindungsgemäße aushärtbare Haftklebemassen als Klebeschicht eines ein- oder doppelseitigen Haftklebebandes eingesetzt werden, wenn dieses entweder zudem eine Trägerschicht umfasst oder die Klebeschicht auf einer Trennschicht, beispielweise einem Liner, angeordnet wird, von dem die Klebeschicht einfach abgelöst werden kann.

Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Die Trägerschicht bezeichnet zumeist die Schicht eines solchen mehrschichtigen Klebebandes, die die mechanischen und physikalischen Eigenschaften des Klebebandes, wie beispielsweise die Reißfestigkeit, Dehnbarkeit, Isolations- oder Rückstellvermögen, maßgeblich bestimmt. Übliche Materialien für die Trägerschicht sind beispielsweise Gewebe, Gelege und Kunststofffolien, zum Beispiel PET-Folien und Polyolefin-Folien. Die Trägerschicht kann jedoch auch selbst haftklebrig sein. Das erfindungsgemäße Klebeband kann in einer bevorzugten Ausführungsform ein doppelseitiges Klebeband sein, dessen Trägerschicht auf beiden Seiten mit einer erfindungsgemäßen aushärtbaren Haftklebemasse versehen ist.

Die Trägerschicht kann auch elektrisch isolierende Eigenschaften haben, so dass das entsprechende erfindungsgemäße Klebeband elektrisch isolierende Eigenschaft hat und zur elektrischen Isolierung eines Gegenstandes verwendet werden kann. Hierfür können isolierende Trägerfolien mit einem spezifischen Durchgangswiderstand von >10¹⁵ Ωcm, bevorzugt >10¹⁶ Ωcm, weiter bevorzugt >10¹⁷ Ωcm, bestimmt gemäß DIN EN 62631-3-1 (VDE 0307-3-1): 2017-01 verwendet. Das erfindungsgemäße Klebeband kann demzufolge in einer bevorzugten Ausführungsform ein doppelseitiges Klebeband sein, dessen isolierende Trägerfolie auf beiden Seiten mit einer erfindungsgemäßen aushärtbaren Klebemasse versehen ist. In einer anderen bevorzugten Variante ist das erfindungsgemäße Klebeband ein einseitiges Klebeband dessen elektrisch isolierende Trägerfolie auf einer Seite mit einer erfindungsgemäßen aushärtbaren Klebemasse versehen ist. Solche einseitigen Klebebänder eignen sich hervorragend, um Batteriezellen in Hybridfahrzeuge und reinen Elektrofahrzeuge zu ummanteln.

Bevorzugt umfasst die isolierende Trägerfolie ein oder mehrere Materialien, ausgewählt aus der Gruppe bestehend aus Polyimid, Polybenzimidazol, Polyamidimid, Polyetherimid, Polyacetal, Polyphenylensulfid, Polyetheretherketon, Polytetrafluorethylen, Polyamid 6, ultrahochmolekulargewichtiges Polyethylen, Polypropylen, Vinylchloridharz, Polystyrol, Polyethylentherephthalat, Acrylnitril-Butadien-Styrol, Polycarbonat, Polyvinylchlorid, Ethylen-Vinylacetat-Copolymer und Polyester, weiter bevorzugt aus der Gruppe bestehend aus Polypropylen, Polyethylentherephthalat, Polycarbonat und Polyvinylchlorid, weiter bevorzugt aus der Gruppe bestehend aus Polypropylen und Polyethylentherephthalat.

Hinsichtlich der Dicke des Trägers gibt es grundsätzlich keine besonderen Einschränkungen. Bevorzugt weist der Träger eine Dicke im Bereich von 20 µm bis 100 µm, weiter bevorzugt im Bereich 30 µm bis 90 µm, weiter bevorzugt im Bereich von 40 µm bis 75 µm auf.

In erfindungsgemäßen Klebebändern können die Klebeschichten mit einer Trennabdeckung, einem sogenannten Releaseliner, abgedeckt sein, um ein problemloses Abwickeln zu ermöglichen und die Haftklebemasse vor Verschmutzung zu schützen. Solche Releaseliner bestehen üblicherweise aus einer ein- oder beidseitig silikonisierten Kunststofffolie (z.B. PET oder PP) oder einem silikonisierten Papierträger.

Die Erfindung betrifft zudem die Verwendung einer erfindungsgemäßen aushärtbaren Haftklebemasse oder eines erfindungsgemäßen Haftklebebandes, zur Verklebung von zwei oder mehr Komponenten durch Aushärtung der aushärtbaren Haftklebemasse.

Mit Blick auf eine effiziente Aushärtung ist dabei eine erfindungsgemäße Verwendung bevorzugt, wobei das Aushärten der aushärtbaren Haftklebemasse mit einer Mindestdosis von 4000 mJ/cm² oder mehr, bevorzugt 5000 mJ/cm² oder mehr, besonders bevorzugt 6000 mJ/cm² oder mehr, erfolgt.

Wie vorstehend erläutert, ist es dabei unter anwendungstechnischen Gesichtspunkten besonders bevorzugt, wenn die Aushärtung mittels einer typischen UV-LED erfolgt, was mit den erfindungsgemäßen aushärtbaren Haftklebemassen trotz der in diesem Fall verringerten Wirksamkeit von Sensitizern auch bei hohen Gehalten an epoxymodifizierten Nitrilkautschuken möglich ist, wenn die kationischen Photoinitiatoren auf die Emissionscharakteristika der UV-LED abgestimmt werden, insbesondere wenn die vorstehend definierten Massenverhältnisse zwischen den kationischen Photoinitiatoren und den epoxymodifizierten Nitrilkautschuken eingestellt werden. Bevorzugt ist insoweit eine erfindungsgemäße Verwendung, wobei das Aushärten der aushärtbaren Haftklebemasse mit einer UV-LED, bevorzugt mit einer UV-LED, deren Emissionsmaximum bei einer Wellenlänge im Bereich von 320 bis 410 nm, besonders bevorzugt im Bereich von 340 bis 390 nm, ganz besonders bevorzugt im Bereich von 360 bis 370 nm, insbesondere bei 365 nm, liegt, erfolgt.

Nachfolgend werden die Erfindung und bevorzugte Ausführungsformen der Erfindung unter Bezugnahme auf Experimente weiter erläutert und beschrieben.

### A. Herstellung der aushärtbaren Haftklebemassen:

Aus den in Tabelle 1 zusammengefassten Bestandteilen, wurden durch Vermischen der Komponenten in üblicher Weise aushärtbare Haftklebemassen erhalten (als Laborausstriche aus einer 60%igen Butanonlösung).

**Tabelle 1 - Zusammensetzung der aushärtbaren Haftklebemassen, alle Angaben in Gewichtsteilen**

| | V1 | V2 | V3 | V4 | E1 | E2 | E3 | E4 | E5 |
|---|---|---|---|---|---|---|---|---|---|
| Levamelt 700 | 33,80 | 33,10 | 33,80 | 33,80 | 32,20 | 34,40 | 33,90 | 34,3 | 34,3 |
| D.E.R. 331 | 33,80 | 33,10 | 16,90 | 28,90 | 32,19 | 17,10 | 17,20 | 17,1 | 17,1 |
| D.E.R. 662E | 16,90 | 16,60 | 16,90 | 16,90 | 16,10 | 17,10 | 17,20 | 17,1 | 17,1 |
| Polydis 3610 | - | 1,90 | - | - | 4,70 | 17,10 | 17,20 | - | - |
| Polydis 3604 | - | - | - | - | - | - | - | 17,1 | - |
| Polydis 3614 | - | - | - | - | - | - | - | - | 17,1 |
| Polycavit 3662 | - | - | 16,90 | 4,90 | - | - | - | - | - |
| Capa 3050 | 12,60 | 12,40 | 12,60 | 12,60 | 12,10 | 12,80 | 12,50 | 12,8 | 12,8 |
| Titandioxid | - | - | - | - | - | - | 0,30 | - | - |
| 1,4-bis(mesitylamino)-anthrachinon | - | - | - | - | - | - | 0,20 | - | - |
| Omnirad BDK / Irgacure 651 | 1,0 | 1,0 | 1,0 | 1,0 | 1,0 | - | - | - | - |
| Deuteron UV 1242 | 1,9 | 1,9 | 1,9 | 1,9 | 1,9 | - | - | | |
| Triarylsulfonium-hexafluorophosphat (50% in Propylencarbonat) | - | - | - | - | - | 1,5 | - | 1,5 | 1,5 |
| Tris(4-((4-acetyl phenyl)sulfanyl)-phenyl)-sulfoniumhexa fluorophosphat | - | - | - | - | - | - | 1,5 | - | - |

Als (Co-)Polymer wurde das kommerziell erhältliche Ethylen-Vinylacetat-Copolymer Levamelt 700 (Vinylacetat Gehalt von 70 Gewichtsprozent) der Firma Arlanxeo eingesetzt.

Als Epoxid-Verbindungen wurden ein kommerziell erhältlicher fester Bisphenol-A-Diglycidylether (Handelsname D.E.R. 662E; gewichtsmittlere Molmasse M_{w} < 2000 g/mol) und ein kommerziell erhältlicher flüssiger Bisphenol-A-Diglycidylether (Handelsname D.E.R. 331; gewichtsmittlere Molmasse M_{w} < 2000 g/mol) der Firma Olin eingesetzt.

Als epoxymodifizierter Nitrilkautschuke wurden ein kommerziell erhältlicher epoxymodifizierter Nitrilkautschuke (Handelsname Struktol Polydis 3610, 3604 und 3614) der Firma Schill+Seilacher "Struktol" GmbH, eingesetzt. Die Komponente Polydis 3610 zeigt dabei insgesamt sieben Maxima im GPC-Elugramm, wobei die fünf mittleren Maxima jeweils mindestens doppelt so groß sind, wie das niedrigmolekulare Maximum.

Als epoxymodifiziertes Vergleichspolymer wurde ein kommerziell erhältliches epoxymodifiziertes Polyalkylenglykol (Handelsname Struktol Polycavit 3662) der Firma Schill+Seilacher "Struktol" GmbH, eingesetzt.

Als Polyol wurde ein kommerziell erhältliches Polyesterpolyol auf der Basis von Polycaprolacton (Handelsname Capa 3050) der Firma Ingevity eingesetzt.

Als kationischer Initiator wurde in einigen Fällen Bis(4,4'-dodecylphenyl)iodonium hexafluoroantimonat (CAS 71786-70-4; 50 % gelöst in Glycidylether (CAS 68609-97-2); die Angaben zur Einwaage in Tabelle 1 bezieht sich auf die Lösung; Handelsname Deuteron UV 1242) der Firma Deuteron in Kombination mit 2,2-Dimethoxy-1,2-diphenylethan-1-on (Handelsname Irgacure 651) der Firma BASF oder 2,2-Dimethoxy-2-phenylaacetophenone (CAS 24650-42-8; Handelsname Omnirad BDK) der Firma IGM Resins eingesetzt.

Als kationischer Initiator wurde in anderen Fällen Triarylsulfoniumhexafluorophosphat (50% in Propylencarbonat; CAS: 109037-77-6; die Angabe zur Einwaage in Tabelle 1 bezieht sich auf die Lösung) der Firma Sigma Aldrich eingesetzt.

Als kationischer Initiator wurde in weiteren Fällen Tris(4-((4-acetylphenyl)sulfanyl)phenyl)sulfoniumhexafluorophosphat (CAS: 953084-13-4) der Firma IGM Resins eingesetzt.

Als Farbstoff wurde 1,4-Bis(mesitylamino)anthrachinon (CAS: 116-75-6; Handelsname Solvaperm 2B-CN) der Firma Clariant eingesetzt.

Aus den hergestelltem aushärtbare Klebemassen wurden durch Ausstriche auf einer 50 µm PET-Folie Klebebänder mit einer Gesamtdicke von etwa 100 µm hergestellt.

### B. Klebeexperimente:

### Klebkraft:

Die Klebkräfte wurden analog zur ISO 29862 (Methode 3) bei 23 °C und 50 % relativer Luftfeuchte bei einer Abzugsgeschwindigkeit von 300 mm/min und einem Abzugswinkel von 180° bestimmt. Die Dicke der Klebstoffschicht betrug dabei jeweils 100 µm. Als Verstärkungsfolie wurde eine geätzte PET-Folie mit einer Dicke von 50 µm verwendet, wie sie von der Fa. Coveme (Italien) erhältlich ist. Als Substrat wurden Stahlplatten entsprechend der Norm verwendet. Die Verklebung des unausgehärteten Messstreifens wurde dabei mittels einer Anrollmaschine mit 4 kg bei einer Temperatur von 23 °C vorgenommen. Die Klebebänder wurden sofort nach der Applikation abgezogen. Die Messungen an den ausgehärteten Messstreifen erfolgten analog nach Aushärtung mit geeignetem Licht (Hönle 365 nm LED Strahler mit einer UV-A Dosis von 5000 mJ/cm²). Der Messwert (in N/cm) ergab sich als Mittelwert aus drei Einzelmessungen und das Versagensbild wurde wie folgt dokumentiert: adhäsiven Versagen (A) oder ein kohäsives Versagen (K).

Die Ergebnisse sind in Tabelle 2 gezeigt.

**Tabelle 2 - Zusammenfassung der Klebeexperimente**

| | V1 | V2 | V3 | V4 | E1 | E2 | E3 | E4 | E5 |
|---|---|---|---|---|---|---|---|---|---|
| Bruchbild* / Klebkraft (vor Aushärtung) / (N/cm) | A >1 | A >1 | A >1 | A >1 | A >1 | A >1 | A >1 | A >1 | A >1 |
| Klebkraft / Bruchbild* (nach Aushärtung) / (N/cm) | 0,80 (A) | 0,21 (A) | 0,74 (A) | 1,19 (A) | 6,39 (A) | 9,18 (A) | 12,85 (A) | 7,69 (A) | 9,72 (A) |

| | | | | | | | | | |
|---|---|---|---|---|---|---|---|---|---|
| * A: adhäsives Versagen; K: kohäsives Versagen | | | | | | | | | |

Anhand der Klebeexperimente lässt sich für die Proben E1 bis E5 eine vorteilhafte Kohäsion, ausgeprägte haftklebrige Eigenschaften und eine ausgezeichnete Klebkraft attestieren.

Der Vergleich der Messwerte für die Probe E1 mit den Vergleichsbeispielen V1 und V2 zeigt nicht nur die unerwartete vorteilhafte Wirkung der Zugabe eines epoxymodifizierten Nitrilkautschuks, sondern verdeutlicht auch, dass der positive Einfluss auf die Klebkraft zwischen 1,9 und 4,7 % Massenanteil unerwartet sprunghaft ansteigt. Es war völlig überraschend, dass die Zugabe eines epoxymodifizierten Nitrilkautschuks, welcher bei niedrigen Gehalten die klebtechnischen Eigenschaften sogar verschlechtert, wie es ausgehend vom vorstehend diskutierten Stand der Technik wohl auch zu erwarten wäre, ab einem gewissen Mindestgehalt die Klebkraft derart ausgeprägt erhöht.

Die Messwerte für die Vergleichsbeispiele V3 und V4 zeigen im Vergleich mit den erfindungsgemäßen Proben, dass sich der positive Effekt des epoxymodifizierten Nitrilkautschuks nicht mit beliebigen anderen epoxymodifizierten Polymeren reproduzieren lässt, sondern dass dem epoxymodifizierten Nitrilkautschuk insoweit eine besondere Bedeutung zukommt.

Die Messwerte für die erfindungsgemäßen Proben E2 bis E5 verdeutlichen, dass sich für hohe Gehalte des epoxymodifizierten Nitrilkautschuks besonders vorteilhafte klebtechnische Eigenschaften zeigen, wobei insbesondere auch ausgezeichnete Verklebungsfestigkeiten erreicht werden. Zudem verdeutlicht der Vergleich der Messwerte für die Proben E2 und E3, dass (da das Titandioxid nur der Einstellung eine gewünschten Opazität dient) die Zugabe eines blauen Farbstoffes zu den spezifischen aushärtbaren Haftklebemassen der vorliegenden Erfindung einen positiven Effekt auf die Klebkraft hat.

### C. Härtungseigenschaften:

Zur Untersuchung des Einflusses des epoxymodifizierten Nitrilkautschuks auf die Aushärtungseigenschaften wurden nach den Vorgaben der Tabelle 3 aus den bereits vorstehend beschriebenen Bestanteilen in üblicher Weise aushärtbare Haftklebemassen erhalten (als Laborausstriche aus einer 60%igen Butanonlösung).

**Tabelle 3 - Zusammensetzung der aushärtbaren Haftklebemassen, alle Angaben in Gewichtsteilen**

| | E6 | E7 |
|---|---|---|
| Levamelt 700 | 33,80 | 34,80 |
| D.E.R. 331 | 0,00 | 33,80 |
| D.E.R. 662E | 16,90 | 0,00 |
| Polydis 3610 | 33,80 | 16,90 |
| Capa 3050 | 12,60 | 12,60 |
| Omnirad BDK / Irgacure 651 | 1,0 | 1,0 |
| Deuteron UV 1242 | 1,9 | 1,9 |

Im Gegensatz zu der Probe E1 lassen sich die Proben E6 und E7 nicht mehr effizient mit dem Hönle 365 nm LED Strahler aushärten. Die Aushärtung der Proben E6 und E7 erfordert den Einsatz von elektromagnetischer Strahlung der für Deuteron UV 1242 geeigneten Wellenlänge im Bereich von etwa 220 bis 250 nm. Um weiterhin eine Aushärtung mit dem Hönle 365 nm LED Strahler zu ermöglichen, kann das Initiatorsystem alternativ auf kationische Photoinitiatoren mit einer höheren Aktivierungswellenlänge umgestellt werden, wie sie beispielsweise vorstehend für die Proben E2 und E3 eingesetzt wurden.

## Patentansprüche

1. Aushärtbare Haftklebemasse, umfassend bezogen auf die Gesamtmasse der aushärtbaren Haftklebemasse:
a) ein oder mehrere filmbildende (Co-)Polymere in einem kombinierten Massenanteil im Bereich von 20 bis 60 %,
b) eine oder mehrere polymerisierbare Epoxid-Verbindungen in einem kombinierten Massenanteil im Bereich von 20 bis 60 %, wobei die Epoxid-Verbindungen ausgewählt sind aus der Gruppe bestehend aus monomeren und oligomeren Epoxid-Verbindungen,
c) einen oder mehrere kationische Photoinitiatoren in einem kombinierten Massenanteil im Bereich von 0,5 bis 7 %, und
d) einen oder mehrere epoxymodifizierte Nitrilkautschuke in einem kombinierten Massenanteil im Bereich von 3 bis 30 %.

2. Aushärtbare Haftklebemasse nach Anspruch 1, wobei der kombinierte Massenanteil der (Co-)Polymere in der aushärtbaren Haftklebemasse im Bereich von 20 bis 55 % liegt, bezogen auf die Masse der aushärtbaren Haftklebemasse.

3. Aushärtbare Haftklebemasse nach einem der Ansprüche 1 oder 2, wobei der kombinierte Massenanteil der polymerisierbaren Epoxid-Verbindungen in der aushärtbaren Haftklebemasse im Bereich von 30 bis 60 % liegt, bezogen auf die Masse der aushärtbaren Haftklebemasse.

4. Aushärtbare Haftklebemasse nach einem der Ansprüche 1 bis 3, wobei der kombinierte Massenanteil der epoxymodifizierten Nitrilkautschuke in der aushärtbaren Haftklebemasse im Bereich von 3,5 bis 25 % liegt, bezogen auf die Masse der aushärtbaren Haftklebemasse.

5. Aushärtbare Haftklebemasse nach einem der Ansprüche 1 bis 4, wobei der eine oder die mehreren kationischen Photoinitiatoren ausgewählt sind aus der Gruppe bestehend aus kationischen Photoinitiatoren, deren Gegenion ausgewählt ist aus der Gruppe bestehend aus Hexafluorophsphat, Hexafluoroantimonat und Tetrakispentafluorophenylborat.

6. Aushärtbare Haftklebemasse nach einem der Ansprüche 1 bis 5, wobei der eine oder die mehreren kationischen Photoinitiatoren das höchstwellenlängige Absorptionsmaximum bei einer Wellenlänge von 290 nm oder mehr aufweisen.

7. Aushärtbare Haftklebemasse nach einem der Ansprüche 1 bis 6, wobei der Quotient aus dem kombinierten Massenanteil der kationische Photoinitiatoren geteilt durch den kombinierten Massenanteil der epoxymodifizierten Nitrilkautschuke im Bereich von 0,06 bis 0,6 liegt.

8. Aushärtbare Haftklebemasse nach einem der Ansprüche 1 bis 7, wobei die aushärtbare Haftklebemasse einen oder mehrere Farbstoffe umfasst.

9. Aushärtbare Haftklebemasse nach Anspruch 8, wobei der eine oder die mehren Farbstoffe ausgewählt sind aus der Gruppe bestehend aus blauen Farbstoffen.

10. Haftklebeband, umfassend als Klebeschicht eine aushärtbare Haftklebemasse nach einem der Ansprüche 1 bis 9.

11. Verwendung einer aushärtbaren Haftklebemasse nach einem der Ansprüche 1 bis 9 oder eines Haftklebebandes nach Anspruch 10, zur Verklebung von zwei oder mehr Komponenten durch Aushärtung der aushärtbaren Haftklebemasse.

12. Verwendung nach Anspruch 11, wobei das Aushärten der aushärtbaren Haftklebemasse mit einer UV-LED erfolgt.

13. Verwendung nach einem der Ansprüche 11 oder 12, wobei das Aushärten der aushärtbaren Haftklebemasse mit einer Mindestdosis von 4000 mJ/cm² oder mehr erfolgt.

## Claims

1. Curable pressure-sensitive adhesive, comprising, based on the total mass of the curable pressure-sensitive adhesive:
a) one or more film-forming (co)polymers in a combined mass fraction in the range from 20% to 60%,
b) one or more polymerizable epoxide compounds in a combined mass fraction in the range from 20% to 60%, the epoxide compounds being selected from the group consisting of monomeric and oligomeric epoxide compounds,
c) one or more cationic photoinitiators in a combined mass fraction in the range from 0.5% to 7%, and
d) one or more epoxy-modified nitrile rubbers in a combined mass fraction in the range from 3% to 30%.

2. Curable pressure-sensitive adhesive according to Claim 1, wherein the combined mass fraction of the (co)polymers in the curable pressure-sensitive adhesive is in the range from 20% to 55%, based on the mass of the curable pressure-sensitive adhesive.

3. Curable pressure-sensitive adhesive according to either of Claims 1 and 2, wherein the combined mass fraction of the polymerizable epoxide compounds in the curable pressure-sensitive adhesive is in the range from 30% to 60%, based on the mass of the curable pressure-sensitive adhesive.

4. Curable pressure-sensitive adhesive according to any of Claims 1 to 3, wherein the combined mass fraction of the epoxy-modified nitrile rubbers in the curable pressure-sensitive adhesive is in the range from 3.5% to 25%, based on the mass of the curable pressure-sensitive adhesive.

5. Curable pressure-sensitive adhesive according to any of Claims 1 to 4, wherein the one or the two or more cationic photoinitiators are selected from the group consisting of cationic photoinitiators whose counterion is selected from the group consisting of hexafluorophosphate, hexafluoroantimonate and tetrakispentafluorophenylborate.

6. Curable pressure-sensitive adhesive according to any of Claims 1 to 5, wherein the one or the two or more cationic photoinitiators have the highest-wavelength absorption maximum at a wavelength of 290 nm or more.

7. Curable pressure-sensitive adhesive according to any of Claims 1 to 6, wherein the ratio of the combined mass fraction of the cationic photoinitiators divided by the combined mass fraction of the epoxy-modified nitrile rubbers is in the range from 0.06 to 0.6.

8. Curable pressure-sensitive adhesive according to any of Claims 1 to 7, wherein the curable pressure-sensitive adhesive comprises one or more dyes.

9. Curable pressure-sensitive adhesive according to Claim 8, wherein the one or the two or more dyes are selected from the group consisting of blue dyes.

10. Pressure-sensitive adhesive tape, comprising as adhesive layer a curable pressure-sensitive adhesive according to any of Claims 1 to 9.

11. Use of a curable pressure-sensitive adhesive according to any of Claims 1 to 9 or of a pressure-sensitive adhesive tape according to Claim 10 for bonding two or more components by curing of the curable pressure-sensitive adhesive.

12. Use according to Claim 11, wherein the curing of the curable pressure-sensitive adhesive takes place with a UV-LED.

13. Use according to either of Claims 11 and 12, wherein the curing of the curable pressure-sensitive adhesive takes place with a minimum dose of 4000 mJ/cm² or more.

## Revendications

1. Matière adhésive sensible à la pression durcissable comprenant, par rapport à la masse totale de la matière adhésive sensible à la pression durcissable :
a) un ou plusieurs (co)polymères filmogènes en une proportion en masse combinée dans la plage de 20 à 60 %,
b) un ou plusieurs composés époxy polymérisables en une proportion en masse combinée dans la plage de 20 à 60 %, les composés époxy étant choisis dans le groupe constitué par les composés époxy monomères et oligomères,
c) un ou plusieurs photoinitiateurs cationiques en une proportion en masse combinée dans la plage de 0,5 à 7 % ; et
d) un ou plusieurs caoutchoucs nitriles modifiés par des groupes époxy, en une proportion en masse combinée dans la plage de 3 à 30 %.

2. Matière adhésive sensible à la pression durcissable selon la revendication 1, dans laquelle la proportion en masse combinée des (co)polymères dans la matière adhésive sensible à la pression durcissable se situe dans la plage de 20 à 55 % par rapport à la masse de la matière adhésive sensible à la pression durcissable.

3. Matière adhésive sensible à la pression durcissable selon l'une quelconque des revendications 1 ou 2, dans laquelle le pourcentage en masse combiné des composés époxy polymérisables dans la matière adhésive sensible à la pression durcissable se situe dans la plage de 30 à 60 %, par rapport à la masse de la matière adhésive sensible à la pression durcissable.

4. Matière adhésive sensible à la pression durcissable selon l'une quelconque des revendications 1 à 3, dans laquelle la proportion en masse combinée des caoutchoucs nitriles modifiés par des groupes époxy dans la matière adhésive sensible à la pression durcissable se situe dans la plage de 3,5 à 25 % par rapport à la masse de la matière adhésive sensible à la pression durcissable.

5. Matière adhésive sensible à la pression durcissable selon l'une quelconque des revendications 1 à 4, dans laquelle les un ou plusieurs photoinitiateurs cationiques sont choisis dans le groupe constitué par les photoinitiateurs cationiques dont le contre-ion est choisi dans le groupe constitué par l'hexafluorophosphate, l'hexafluoroantimoniate et le tétrakispentafluorophénylborate.

6. Matière adhésive sensible à la pression durcissable selon l'une quelconque des revendications 1 à 5, dans laquelle les un ou plusieurs photoinitiateurs cationiques présentent le maximum d'absorption de la plus grande longueur d'onde à une longueur d'onde de 290 nm ou plus.

7. Matière adhésive sensible à la pression durcissable selon l'une quelconque des revendications 1 à 6, dans laquelle le quotient de la proportion en masse combinée des photoinitiateurs cationiques divisée par la proportion en masse combinée des caoutchoucs nitriles modifiés par des groupes époxy se situe dans la plage de 0,06 à 0,6.

8. Matière adhésive sensible à la pression durcissable selon l'une quelconque des revendications 1 à 7, dans laquelle la matière adhésive sensible à la pression durcissable comprend un ou plusieurs colorants.

9. Matière adhésive sensible à la pression durcissable selon la revendication 8, dans laquelle les un ou plusieurs colorants sont choisis dans le groupe constitué par les colorants bleus.

10. Ruban adhésif sensible à la pression, comprenant comme couche adhésive une matière adhésive sensible à la pression durcissable selon l'une quelconque des revendications 1 à 9.

11. Utilisation d'une matière adhésive sensible à la pression durcissable selon l'une quelconque des revendications 1 à 9 ou d'un ruban adhésif sensible à la pression selon la revendication 10, pour le collage de deux composants ou plus par durcissement de la matière adhésive sensible à la pression durcissable.

12. Utilisation selon la revendication 11, dans laquelle le durcissement de la matière adhésive sensible à la pression durcissable est effectué avec une LED UV.

13. Utilisation selon l'une quelconque des revendications 11 ou 12, dans laquelle le durcissement de la matière adhésive sensible à la pression durcissable est effectué avec une dose minimale de 4 000 mJ/cm² ou plus.
